(19) **Europäisches Patentamt / European Patent Office / Office européen des brevets**

(11) **EP 2 337 327 B1**

(12) **EUROPÄISCHE PATENTSCHRIFT**

(45) Veröffentlichungstag und Bekanntmachung des Hinweises auf die Patenterteilung:
**27.11.2013   Patentblatt 2013/48**

(51) Int Cl.:
*H04M 3/53* (2006.01)

(21) Anmeldenummer: **09179316.6**

(22) Anmeldetag: **15.12.2009**

(54) **Verfahren und Einrichtung zur Identifizierung von Sprechern in Bild- und Videonachrichten**

Method and device for highlighting selected objects in image and video messages

Procédé et dispositif d'accentuation d'objets sélectionnés dans des informations imagées et vidéo

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**22.06.2011   Patentblatt 2011/25**

(73) Patentinhaber: **Deutsche Telekom AG**
**53113 Bonn (DE)**

(72) Erfinder:
 • **Runge, Dipl.-Ing., Fred**
 **15838, Wünsdorf (DE)**

 • **Scheerbarth, Thomas**
 **Berlin (DE)**

(74) Vertreter: **2K Patentanwälte Blasberg Kewitz & Reichel**
**Partnerschaft**
**Schumannstrasse 27**
**60325 Frankfurt am Main (DE)**

(56) Entgegenhaltungen:
 **WO-A1-2004/054216      WO-A1-2006/047347**
 **DE-A1-102007 010 662**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Steuerung eines digitalen Nachrichtensystem in dem eine Vielzahl von personengebunden Nachrichten auf einem Speichersystem gespeichert werden. Insbesondere ein System bei dem Bildinformationen aus den Nachrichten extrahiert werden, um einen virtuellen Sprecher zu erzeugen.

Insbesondre betrifft die Erfindung ein Video und/oder Bildnachrichten System und bezieht sich insbesondere auf ein Verfahren und eine Anordnung, mit dem/der einem Empfänger Nachrichten, die im Rahmen des Systems, beispielsweise über eine Mail-Box, übermittelt werden, mit einem zusätzlichen 3D-Informationsgehalt anzubieten, welcher in der Originalnachricht nicht enthalten ist. Dem Empfänger sollen Nachrichten in möglichst authentischer Form mit einem verbesserten Informationsgehalt zu Nachrichtensprechern angeboten werden, der bei dem Empfänger einen räumlichen Eindruck hervorruft, der allein aus der versandten 2D-Originalnachricht nicht sichtbar ist.

Stand der Technik

Messaging Systeme/Nachrichten Systeme (Mobilbox, Voicemail Systeme) sind im Markt hinlänglich bekannt (siehe z.B. http://www.t-mobile.de/mobilbox). In Abhängigkeit von der Systemstruktur werden auch oft Sprach-, Bild- und/oder Videonachrichten als Anhänge von Textnachrichten (Emailanhänge) gemeinsam mit Absenderinformationen (z.B. Absenderkennung (z.B. CLI, HLR, Absenderadresse u.ä.) als komplette Videonachrichten in Videomailboxen auf Basis der Videotelefonie analog zu schon seit langem existierenden Voice-Mailboxen oder digitalen Anrufbeantwortern usw. abgespeichert.

Auch kann als allgemein bekannter StdT vorausgesetzt werden, dass in computeranimierten Anwendungen Avatare eingesetzt werden, welche mit Funktionalitäten ausgestattet sind, die es ermöglichen, unter Anwendung von Sprachsynthese Texte auszugeben, wobei entsprechende Lippenbewegungen abgeleitet und dargestellt werden. Mit Mitteln der Gesichtsdetektion und Ermittlung von Gesichtsausschnitten, die durch bestimmte Gesichtselemente (z.B. Lippen) ausgefüllt sind, lassen sich über eine Kamera aufgenommene Lippenbewegungen eines Sprechers in den Lippenbereich eines unbewegten Fotos einfügen, welches die Rolle eines Avatars einnehmen kann (siehe http://www.logitech.com/index.cfm/webcam_communications/webcams/devices/3056&cl=de,de, Video Effects).

In EP1648151A1 ist offengelegt, dass Nachrichten zur späteren Bearbeitung für ein System zur maschinellen Übersetzung weiterer Nachrichten gespeichert werden. Jedoch liegt dabei der Schwerpunkt auf der Auswertung textueller und phonetischer Informationen, die in den gespeicherten Nachrichten enthalten sind. Dies gilt auch für Bildnachrichten, die ggf. Texte im Bild oder in Metainformationen enthalten. Eine Modifikation der Bildinhalte selbst wird dabei nicht beschrieben.

(Nachteile StdT:)

Die Darstellung von Bildern in Bildnachrichten bzw. Videonachrichten erfolgt zweidimensional, da die in Telekommunikationsendgeräten eingesetzten Aufnahmeverfahren auf der Ausstattung dieser Endgeräte mit einer Kamera beruhen. Eine zusätzliche Ausstattung mit mehr als zwei Kameras in Kombination mit Übertragungsverfahren die eine höhere Bandbreite erfordern, ist naheliegend, jedoch in kompakteren Geräten aufgrund einer geringen Basisbreite und der daraus folgenden geringen 3D-Qualität nicht anzuraten. Damit ist eine 3D-Darstellung des Sprechers einer Bild- und/oder Videonachricht nur mit starken Qualitätseinbußen möglich.

Auch die Erweiterung von 2D-Avataren, die, wie oben beschrieben aus Fotos generiert werden können, auf 3D-Animationen mithilfe von jeweils zwei gleichzeitig aufgenommenen Abbildungen ist damit nur begrenzt und unter Qualitätseinbußen möglich.

Gleichzeitig zeigen Verfahren zur dreidimensionalen Darstellung von Bildern und/oder Videos immer größere Fortschritte (siehe http://www.elektroniknet.de/?id=3200&type=98), so dass hier auch ein Bedarf nach 3D-Darstellung von Video-Bild-Nachrichten entsteht.

Bekannt sind ebenfalls die 2D-Darstellung von virtuell erzeugten animierten Avataren, welche systemintern als vollständiges 3D-Modell vorliegen und z.B. Texte auf einem System bestehend aus Display und Lautsprecher wiedergeben, ohne dass dabei gleichzeitig ein rechtes und ein linkes Bild erzeugt werden (DE102004014189A1).

Eine echte 3D-Darstellung von Objekten oder Bildern beruht auf der (quasi-)gleichzeitigen Ausgabe von zwei 2D-Bildern, wobei ein Bild für das linke und das zweite Bild für das rechte Auge bestimmt ist.

Die Aufnahme mit seitlich versetzten Kameras zur Erzeugung von 3D-Bildern ist allgemein bekannt und soll hier nicht beschrieben werden. Auch existieren Methoden, aus einem einzelnen 2D-Bild künstliche 3D-Bilder aus vorhandenen Modellen zu generieren, deren Grundlage ein vollständiges 3D-Modell manuell annotierter/analysierter 2D-Objekte darstellt, welches durch die räumlichen Koordinaten einer größeren Anzahl von Punkten auf der Oberfläche der Objekte repräsentiert wird. Beispiele dafür sind EP1412917B1 und EP0991023B1.

Zur Betrachtung von 3D-Darstellungen existieren verschiedene Verfahren mit Hilfsmitteln, z.B. über Linsenraster Anaglyphenverfahren, Polarisationsbrillen usw.

Auch können zwei für das rechte und linke Auge vorgesehene 2D-Bilder hilfsmittellos über Kreuzblick oder Parallelblick betrachtet werden.

In US4925294A1 wurde versucht, ein allgemeines Verfahren zu beschreiben aus einem einzigen 2D-Bild ein 3D-Bild zu generieren indem verschiedene Vorder- und Hintergrundbildelemente separiert und aus der Kenntnis von deren 3D-Charakteristiken aus dem 2D-Bild jeweils ein Rechts- und ein Linksbild zu generieren. In der folgenden Beschreibung werden für die Generierung immer zwei 2D-Bilder benötigt, aus denen dann jeweils ein 2D-Rechts- und ein 2D-Linksbild für ein 3D-Bild generiert wird, d.h. die beschriebene Kenntnis der Eigenschaften einzelner Objekte oder von Objektmodellen ist im unten beschriebenen Verfahren nicht erforderlich.

## Überblick über die Erfindung:

Aufgabe der vorliegenden Erfindung ist die Darstellung der Person, die die Nachricht hinterlassen hat, als virtuellen Sprecher, durch Suchen von Bildern aus den Nachrichten und deren Animation. Gelöst wird diese Aufgabe durch eine Erfindung mit den Merkmalen der unabhängigen Ansprüche.

Insbesondere werden die Sprecher in einer 3D-Darstellung gezeigt, wobei der reale Sprecher für das im folgenden beschriebene System auf der gleichzeitigen oder quasi-gleichzeitigen Ausgabe (Zeitraum innerhalb von wenigen Millisekunden, die für den Betrachter kaum wahrnehmbar sind) von zwei 2D-Bildern von Nachrichtensprechern beruht, wobei ein Bild für das linke und das zweite Bild für das rechte Auge bestimmt ist.

Zur 3D-Darstellung eines Sprechers werden aktuelle 2D-Bildnachrichten vergangener Bild- und/oder Video-Nachrichten eines gleichen Sprechers im Mailbox-System unter Auswertung der Absenderinformationen gesucht, diese aus den Bildern extrahiert und in ihrer Größe an eine einheitliche Größe der Sprecherdarstellung angepasst. Hierbei werden verschiedene Perspektiven (Links- und Rechtsbilder) der 2D-Einzelaufnahmen des Sprechers unter Anpassung von Helligkeits- und/oder Farbunterschieden zu einem 3D-Abbild verarbeitet. Es werden

a) zur 3D-Darstellung eines Sprechers einer aktuellen 2D-Videonachricht aus den Einzelbildern einer Videonachricht und/oder zusätzlich aus vergangenen Video-/Bildnachrichten des gleichen Sprechers (unter Auswertung der Absenderinformationen) die Sprecherabbildungen extrahiert, in ihrer Größe an eine einheitliche Größe der Sprecherdarstellung angepasst und in der gleichen Videoaufnahme, vergangenen Videoaufnahmen und/oder Bildern des Sprechers vorhandene verschiedene Perspektiven der Aufnahmen des Sprechers unter Anpassung von Helligkeits- und/oder Farbunterschieden zu einem 3D-Abbild des Sprechers verarbeitet.

b) zur 3D-Darstellung eines Sprechers aktueller Text- und/oder Sprachnachrichten, die Absenderinformationen der Nachrichten (z.B. Email, Voicemail, ...) ausgewertet und im Mailbox-System nach 2D-Bild- und/oder 2D-Videonachrichten und/oder bereits erstellten 3D-Abbildern dieses Sprechers gesucht und diese Informationen aus den Nachrichten extrahiert, in ihrer Größe an eine einheitliche Größe der Sprecherdarstellung angepasst und verschiedene Perspektiven der Aufnahmen des Sprechers unter Anpassung von Helligkeits- und/oder Farbunterschieden zu einem ggf. aktualisierten 3D-Abbild verarbeitet.

c) zur 3D/2D-Darstellung eines Sprechers aktueller Nachrichten von Bild- und/oder Video-Nachrichten für den keine Informationen vorliegen durch ein beliebiges, ggf. durch den

Empfänger voreinstellbares, vorhandenes 2D/3D-Abbild eines anderen Sprechers ersetzen. Um Bilder, bestimmten Einheiten (z.B. Personen) zuordnen zu können, werden diese gemeinsam mit Adressen/Absenderkennungen (wie z.B. Home Location Register (HLR), Calling Line Identification (CLI), IP-Adresse, Email-Adr., persönlichen Kennungen, ...) oder ähnlichen Adressinformationen gespeichert, wie dies z.B. für Video-Nachrichten und folglich den dort ggf. enthaltenen Bildinformationen der Fall ist.

In einer möglichen Ausführungsform müssen verschiedene Adressen/Kennungen einer Person untereinander in eine eindeutige Kennung umgesetzt werden, wenn z.B. über unterschiedliche Kommunikationswege eine Ablage von Nachrichten erfolgt.

Weitere Details können den Ansprüchen entnommen werden.

Im Einzelnen handelt es sich um ein Digitales Nachrichtensystem in dem eine Vielzahl von personengebundenen Nachrichten auf einem Speichersystem gespeichert wird. Hierbei handelt es sich vorzugsweise um mindestens einen stationären Server, der auf das Speichersystem zugreift. Es sind natürlich auch mobile Endgeräte zu berücksichtigen. Die Nachrichten können SMS, EMAIL, MMS, Bild-/Video-, Sprachnachrichten etc. sein, die vorzugweise durch einen zentralen Server entgegengenommen werden, um Sie dann z.B. über ein Web-Frontend wieder bereitzustellen, oder so anzureichern, dass Sie durch Client- oder Client/Server-Anwendungen in 2D oder 3D umgewandelt und dargestellt werden können. Es ist natürlich auch denkbar, dass alle Operationen auf einem mobilen Endgerät ablaufen und an die Nachricht ein Video-Film angehängt wird, der die Nachricht dann auf dem PDA, Telefon etc. optisch darstellt. Die Nachrichten sind mit Absenderadressen (z.B. Email, Telefonnummer etc.) versehen und ein Teil umfasst der Nachrichten ferner digitale Bilddaten oder Videodaten. Hierbei handelt es sich um Daten mit unterschiedlichen Anhängen, wie Video- oder Bildattachments.

Weitere Komponenten sind eine Einheit zum Identifizieren von Bildbereichen mit Gesichtern und/oder Personen in den digitalen Bild- oder Videodaten, die die gleiche Absenderadresse aufweisen. In der Regel wird diese durch bekannte Bild-/Gesichtserkennungsverfahren durchgeführt die auf einem Prozessor ablaufen.

Eine weitere Einheit dient zum Bestimmen von absenderrelevanten Bildbereichen aus den identifizierten Bildbereichen auf der Basis von Referenzbildern, die auf einem Speichersystem abgelegt sind. Hierbei soll das Bild des Absenders bestimmt werden, um daraus ein 2D/3D Modell eines virtuellen Sprechers zu erzeugen. Ein solches Verfahren kann auf Referenzbildern basieren, die korrespondierend (z.B. tabellarisch) zu einer Absenderadresse abgelegt ist. Falls ein solches nicht vorliegt kann auf der Basis von Spracherkennungsverfahren, unter Berücksichtigung von Sprachdaten in der Nachricht, in Referenzsprachdaten oder von Sprachdaten in den Videodaten, die miteinander verglichen werden, das Bild des Absenders ermittelt werden. Hierbei werden die Sprachdaten innerhalb eines Videos z.B. mit Sprachproben/Sprachmodellen aus Nachrichten verglichen, die der gleiche Absender abgegeben hat. Das Verfahren kann auf einem Standardprozessor mit entsprechender Software ablaufen.

In einer alternativen Ausführungsform wird die Häufigkeit des Auftretens von Bildbereichen in Nachrichten mit der gleichen Absenderadresse bestimmt. Hier kann dann z.B. Mailboxübergreifend gearbeitet werden, so dass die Person, die am häufigsten auftaucht, als der Absender bestimmt werden.

In einer 2D bzw. 3D Engine, die ebenfalls eine Software mit mind. einem Prozessor sein kann, erfolgen, wobei ein Bestimmen des absenderrelevanten Bildbereichs durchgeführt wird, um ein digitales grafisches Modell eines Sprechers zu erzeugen, das den Inhalt der Nachricht durch Animation von Mundbereichen wiedergibt.

Weiterhin ist eine Einheit mit einer Schnittstelle vorhanden (Prozessor) zur Speicherung des identifizierten absenderrelevanten 2D-Bildbereiches in Zusammenhang mit der Absenderadresse und Parameter, die die Perspektive des Absenderabbildes charakterisieren. Hierbei werden durch bekannte Bilderkennungsverfahren die Perspektive und die Körperstellung des Absenders bestimmt. Weiterhin ist eine Schnittstelle zur Übergabe des absenderrelevanten 2D-Bildbereiches und weiterer absenderrelevanter Bildbereiche aus vergangenen Nachrichten aus dem

Speichersystem an ein Modul zur Generierung von 3D-Bilddaten bekannt.

Ferner sind Mittel zur Ermittlung der Perspektive/Ausrichtung des 2D-Abbilds anhand von abgebildeten Körperproportionen bekannt. Um ein 3D-Modell zu generieren bedarf es Mittel zur Suche eines zweiten 2D-Abbildes für den 3D-Eindruck. Hierbei wird auf eine notwendige zweite Ausrichtung durch Auswertung der Verhältnisse von maschinell auswertbaren Körperproportionen und/oder Änderungen der Position vor dem Hintergrund geachtet (insbesondere durch Extrahierung von Gesichtsmerkmalen oder Körpergliedern und deren Proportionen zu einander) Auch diese sind wiederum durch Parameter gekennzeichnet, welche eine andere Perspektive in der gleichen horizontalen Ebene beschreiben.

Weiterhin werden Mittel zur Generierung mindestens eines 3D-Abbildes des Nachrichtensprechers durch Ergänzung des Original 2D-Bildes mit einem aus diesem Bild kopierten zweiten Bild eingesetzt, in welchem das Absenderabbild ausgeschnitten und durch ein Bild aus einer anderen Perspektive ersetzt wird.

Wobei die Mittel zur Suche des zweiten Abbilds so ausgebildet sind, das bei der Suche eines zweiten 2D-Abbildes zuerst in der aktuellen Nachricht nach Bildern (z.B. einer Videonachricht als Folge von Bildern) aus einer anderen Perspektive vorzugsweise unter Anwendung von Gesichtserkennungsverfahren bei Anwesenheit mehrerer Personen gesucht wird. Sind in der aktuellen Nachricht keine weiteren verwertbaren Bilder aus einer anderen Perspektive vorhanden, so erfolgt die Suche im Speichersystem vorzugsweise im Archivspeicher des Nachrichtensystems. Dies kann auch z.B. als Batch-Routine in der Nacht erfolgen, so dass bereits eine Vielzahl von Informationen vorliegen, bevor sie angefragt werden. Es erfolgt dabei vorzugsweise eine Prüfung der Proportionen von Merkmalen des Absenderabbildes der zusätzlich gefundenen Bilder aus einer anderen Perspektive auf Einhaltung vorgegebener Grenzwerte. Diese Grenzwerte können durch die Position, die Farben, die Auflösung, die Qualität des Bildes bestimmt sein. Andere Grenzwerte beschreiben eine horizontale Aufnahmeebene (Aufnahmewinkel in der Vertikalen) und eine vertikale Aufnahmeebene (Aufnahmewinkel in der Horizontalen).

Wesentliche Merkmale

Beschrieben wurde ein internetbasiertes Mailboxsystem bestehend aus personengebundenen Nachrichtenspeichern, welches zusätzlich mit mindestens einem Modul zur Speicherung von Absenderadressdaten und damit verbundenen Bilddaten von Nachrichtenabsendern, zur Sammlung dieser Bilddaten und zur Generierung von 3D-Bilddaten der Absender aus 2D-Bilddaten ausgestattet ist.

Das Verfahren zur Identifizierung und Verifizierung von Nachrichtenabsendern zur Generierung von 3D-Nachrichten ist ferner dadurch gekennzeichnet, dass

■ Nachrichten beiliegende Bilder oder Videoinformationen als Folge von Bildern gemeinsam mit den Absenderdaten gespeichert werden,

■ in diesen Bildern Bereiche identifiziert bzw. detektiert werden, welche Gesichter und/oder Personen darstellen,

■ diese Bereiche mit mindestens einem Referenzbild des Absenders der betreffenden Nachricht aus dem Speichermodul zum Zwecke der Identifizierung eines Bildbereiches als absenderrelevant verglichen werden, wobei Referenzbilder des Absenders aus verifizierten und archivierten Bild- und/oder Videonachrichten desselben Absenders gewonnen werden.

■ Durch Einsatz von Sprechererkennungsverfahren überprüft wird, ob der Sprecher der Nachricht dem durch eine Kennung/Absenderadresse identifizierten Absender entspricht.

■ Gesichts- und Sprechererkennung zu einem Verifizierungsergebnis zusammengeführt werden

■ die Nachricht bzw. ein Bildbereich der Nachricht als absenderrelevant identifiziert wird:

　　o Ermittlung der Perspektive/Ausrichtung des absenderrelevanten Bildbereiches (2D-Abbild) anhand von abgebildeten Körperproportionen

　　o Speicherung des identifizierten absenderrelevanten Bildbereiches inkl. Perspektive/Ausrichtung in Zusammenhang mit den Adressdaten des Absenders und als weiteres Referenzbild des Absenders

　　o Übergabe des absenderrelevanten Bildbereiches und weiterer absenderrelevanter Bildbereiche inkl. Perspektive/Ausrichtung aus vergangenen Nachrichten aus dem o.g. Speicher an ein Modul zur Generierung von 3D-Bilddaten.

Ein weiterer Aspekt ist ein internetbasiertes Mailboxsystem bestehend aus personengebundenen Nachrichtenspeichern, welches zusätzlich mit mindestens einem Modul zur Speicherung von Absenderadressdaten und damit verbundenen Bilddaten von Nachrichtenabsendern, zur Sammlung dieser Bilddaten und zur Generierung von 3D-Bilddaten der Absender aus 2D-Bilddaten ausgestattet ist.

Das Verfahren zur Generierung von 3D-Abbildern von Nachrichtenabsendern ist dadurch gekennzeichnet, dass

■ Nachrichten beiliegende Bilder oder Videoinformationen als Folge von Bildern gemeinsam mit den Absenderdaten gespeichert werden,

■ in diesen Bildern Bereiche identifiziert bzw. detektiert werden, welche Gesichter und/oder Personen darstellen,

■ diese Bereiche mit mindestens einem Referenzbild des Absenders der betreffenden Nachricht aus dem Speichermodul zum Zwecke der Identifizierung eines Bildbereiches als absenderrelevant verglichen werden,

■ Wird ein Bildbereich als absenderrelevant identifiziert:

　　o Speicherung des identifizierten absenderrelevanten 2D-Bildbereiches in Zusammenhang mit den Adressdaten des Absenders und die Perspektive des Absenderabbildes charakterisierenden Parametern,

　　o Übergabe des absenderrelevanten 2D-Bildbereiches und weiterer absenderrelevanter Bildbereiche aus vergangenen Nachrichten aus dem o.g. Speicher an das Modul zur Generierung von 3D-Bilddaten

　　o Ermittlung der Perspektive/Ausrichtung des 2D-Abbilds anhand von abgebildeten Körperproportionen,

　　o Suche eines zweiten 2D-Abbildes zum empfangenen Abbild im Rahmen der für den 3D-Eindruck notwendigen zweiten Ausrichtung durch Auswertung der Verhältnisse von Körperproportionen durch Suche nach einem Abbild des Absenders, das durch Parameter gekennzeichnet ist, welche eine andere Perspektive in der gleichen horizontalen Ebene beschreiben.

　　　　■ Dabei wird zuerst in der aktuellen Nachricht (z.B. Videomail) nach Bildern aus einer anderen Perspektive, ggf. unter Anwendung von Gesichtserkennungsverfahren bei Anwesenheit mehrerer Personen, gesucht

　　　　■ Sind in der aktuellen Nachricht keine weiteren verwertbaren Bilder aus einer anderen Perspektive vorhanden erfolgt die Suche im Archivspeicher des Mailsystems

　　　　■ Dabei Prüfung der Proportionen von Merkmalen des Absenderabbildes der zusätzlich gefundenen Bilder aus einer anderen Perspektive auf Einhaltung vorgegebener Grenzwerte, die die horizontale Aufnahmeebene (Aufnahmewinkel in der Vertikalen) und die vertikale Aufnahmeebene (Aufnahmewinkel in der Horizontalen) beschreiben

　　o Größen- oder Farbadaption des gefundenen und einzufügenden Bildes

　　o Generierung mindestens eines 3D-Abbildes des Nachrichtensprechers durch Ergänzung des Original 2D-Bildes mit einem aus diesem Bild kopierten zweiten Bildes, in welchem das Absenderabbild ausgeschnitten und durch dessen Abbild aus einer anderen Perspektive ersetzt wird.

　　o Ablage von Informationen, die verschiedene Perspektiven der Abbilder des Absenders in den Nachrichten kennzeichnen im o.g. Speicher des Mailboxsystems

Der Vorteil der oben beschriebenen Verfahrensweisen besteht darin, dass Nachrichten mit zweidimensionalen Bildinformationen (Bilder, Videos) eines Objektes (z.B. des Sprechers) als 3D-Nachrichten wiedergegeben werden können. Zusätzlich können Nachrichten, die im Original keine bildlichen Informationen enthalten durch ergänzend generierte Bild-/Videoinformationen aufgewertet werden.

Wird nur ein identifiziertes Objekt innerhalb der 2D-Nachricht in ein 3D-Objekt umgewandelt, so ergibt sich dadurch der Vorteil einer zusätzlichen Hervorhebung des fokussierten Objektes vor einem 2D-Hintergrund bzw. in einer 2D-Umgebung.

Figuren Beschreibung

Im Folgenden werden die Figuren im Detail beschrieben

Fig. 1 zeigt einen schematischen Aufbau des Nachrichten/Mailbox-Systems mit unterschiedlichen Mailboxen und mobilen Endgeräten.

Fig. 2a-3b zeigen das schematische Verfahren zur Bestimmung von Bildern für eine 3D Darstellung.

Detaillierte Beschreibung:

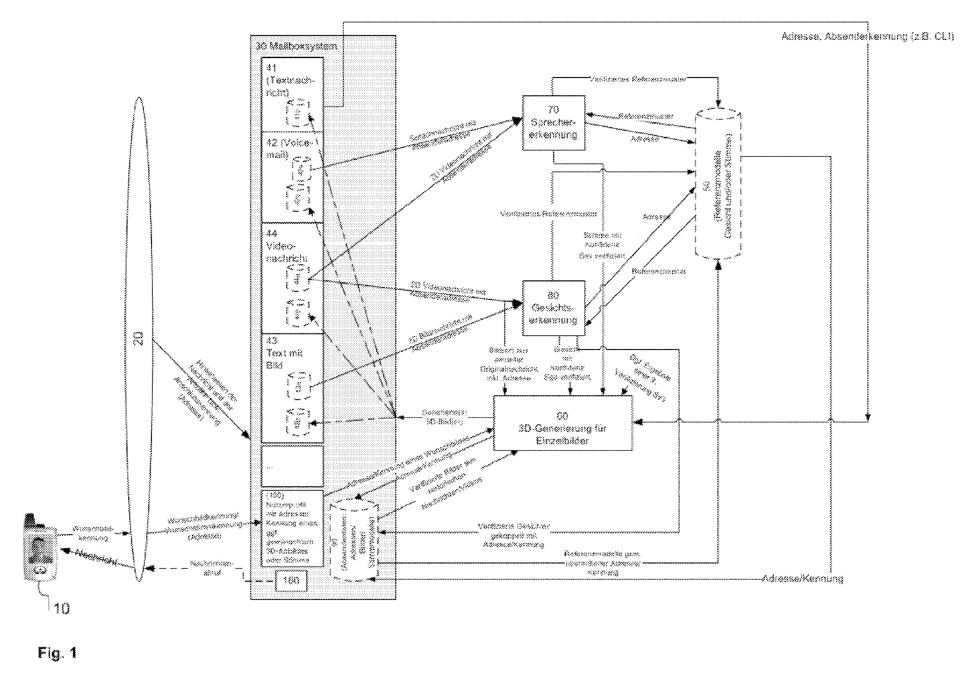

Auf Bildern/Videos (43a, 44a die Fig. 1) der Nachrichten können außer dem Sprecher auch andere Personen sichtbar sein, so dass es zielführend ist, das Gesicht des Nachrichtensprechers zu verifizieren. Deshalb werden auf Darstellungen in den Nachrichten auf denen mehrere Gesichter erkannt werden, die Darstellungen dieser Gesichter extrahiert. Durch den Vergleich mit bekannten Gesichtern des anhand seiner Adresse identifizierten Nachrichtensprechers werden in der Gesichtserkennung (80) die Bilder nacheinander oder in Parallelprozessen verifiziert. Die Absenderadresse wird dazu genutzt, um die für die Verifizierung notwendigen Referenzgesichter/Referenzmodelle/Referenzmuster zu ermitteln.

Im Weiteren wird dann nur für den Bild-/Video-Gesichtsbereich ein 3D-Abbild generiert, dessen Verifizierung im Vergleich zum über die Adresse ermittelten Referenzmodell aus 50 einen Mindestwert an Übereinstimmung (Konfidenz) mit dem Referenzmodell des Absenders ergibt, wobei festgelegt werden kann, ob zur erfolgreichen Verifizierung ein festgelegter Konfidenzgrenzwert über- oder unterschritten werden muss (dieser Wert kann zwischen 70-80% liegen).

D.h. die Generierung eines 3D-Bildes bzw. von 3D-Bildfolgen (60) wird vorzugsweise nur in dem Fall vollzogen, wenn das Gesicht in der Bild-/Videonachricht erfolgreich verifiziert wurde (siehe Fig. 1). Bilder ohne detektierte Gesichter bzw. ohne mindestens ein erfolgreich verifiziertes Gesicht des Absenders werden im Rahmen dieses Prozesses nicht verändert.

Zur zusätzlichen Absicherung der Verifizierung des Sprechers einer Videonachricht aus der sowohl Bilder des Sprechers (Video = Folge von Einzelbildern und vorzugsweise Tonsignalen) als auch dessen Stimmsequenzen extrahiert werden können, kann die Verifizierung des Gesichts des Absenders (gem. Absenderadresse) mit der Verifizierung der Stimme des Sprechers kombiniert werden, hierzu wird nun zusätzlich über die Gesichtserkennung anhand implementierter Vergleichsmodelle festgestellt, ob ein Gesicht mit sich bewegenden Lippen dem des Absenders entspricht. Ist dies der Fall, wird das Gesicht des Sprechers anhand von mindestens einem Referenzmodell aus 50 und/oder 90 des mit Hilfe der Absenderadresse identifizierten Sprechers verifiziert.

Das Verifizierungsergebnis in Form eines Zuverlässigkeitsscores wird gespeichert.

Ebenfalls verifiziert wird die aufgezeichnete Stimme des Sprechers anhand von mindestens einem Referenzmodell aus 50 und/oder 90 des mit Hilfe der Absenderadresse identifizierten Sprechers. Das Ergebnis der Sprecherverifizierung in Form eines Zuverlässigkeitsscores wird ebenfalls gespeichert.

Die Reihenfolge der beiden Verifizierungen ist für die kombinierte Verarbeitung nicht von Belang.

Kombiniert mit der Gesichtserkennung oder umgekehrt kann nun zusätzlich die Stimme des lokalisierten Sprechers mithilfe bekannter Verfahren der Sprecherverifizierung/Sprechererkennung ausgewertet werden.

Bei der Kombination von Ergebnissen der Sprecherverifizierung, der Gesichtserkennung und ggf. der Verifizierung anderer Medien können u.U. widersprüchliche Verifizierungsergebnisse mit unterschiedlichen Zuverlässigkeitswerten entstehen. So ist es unter der beispielhaften Voraussetzung eines einheitlichen Ergebnisbereiches von 0..100 für die Sprecherverifizierung (SV) und Gesichtserkennung (GE) und der Annahme, dass Werte von 0..80 eine Ablehnung und Werte von 81..100 die Akzeptanz der Signale bedeuten, durchaus möglich, dass z.B. die SV einen Wert von 79 und die GE einen Wert von 81 liefert. Noch mehrdeutiger wird die Entscheidung zur Generierung des Entscheidungssignals, wenn neben der Auswertung von mehr als zwei Mediensignalen bei den Ergebniswerten von unterschiedlichen Zuverlässigkeitsgrenzwerten für die einzelnen Ergebnisse ausgegangen werden muss.

Dieses Problem kann z.B. mit einer Normalisierung der Einzelwerte und einer gewichteten Addition der normierten Werte zur Bildung des zu vergleichenden Entscheidungswertes gelöst werden, z.B.:

$$Ew = Wsv \cdot \frac{Ssv - Ssv_{min}}{Ssv_{max} - Ssv_{min}} + Wge \cdot \frac{Sge - Sge_{min}}{Sge_{max} - Sge_{min}} + Wv3 \cdot \frac{Sv3 - Sv3_{min}}{Sv3_{max} - Sv3_{min}} + \ldots + Wvn \cdot \frac{Svn - Svn_{min}}{Svn_{max} - Svn_{min}}$$

wobei

| | |
|---|---|
| Ew | - Normalisierter Entscheidungswert |
| Ssv | - Zuverlässigkeitsscore der Sprecherverifizierung |
| $Ssv_{min}$ | - Minimalwert des Zuverlässigkeitsscores der Sprecherverifizierung |
| $Ssv_{max}$ | - Maximalwert des Zuverlässigkeitsscores der Sprecherverifizierung |
| Wsv | - Wichtungsfaktor für den normalisierten Zuverlässigkeitsscore der Sprecherverifizierung |
| Sge | - Zuverlässigkeitsscore der Gesichtserkennung |
| $Sge_{min}$ | - Minimalwert des Zuverlässigkeitsscores der Gesichtserkennung |
| $Sge_{max}$ | - Maximalwert des Zuverlässigkeitsscores der Gesichtserkennung |
| Wv3 | - Wichtungsfaktor für den normalisierten Zuverlässigkeitsscore der Gesichtserkennung |
| Sv3 | - Zuverlässigkeitsscore der Gesichtserkennung |
| $Sv3_{min}$ | - Minimalwert des Zuverlässigkeitsscores der 3. Verifizierung (z.B. Gestikerkennung) |
| $Sv3_{max}$ | - Maximalwert des Zuverlässigkeitsscores der 3. Verifizierung (z.B. Gestikerkennung) |
| Wv3 | - Wichtungsfaktor für den normalisierten Zuverlässigkeitsscore der möglicherweise 3. Verifizierung (z.B. Gestikerkennung) |
| Svn | - Zuverlässigkeitsscore des n-ten verifizierten Mediums |
| $Svn_{min}$ | - Minimalwert des Zuverlässigkeitsscores des n-ten verifizierten Mediums |
| $Svn_{max}$ | - Maximalwert des Zuverlässigkeitsscores des n-ten verifizierten Mediums |
| Wvn | - Wichtungsfaktor für den normalisierten Zuverlässigkeitsscore des n-ten verifizierten Mediums |

Der einfachste Fall wäre hier bei gleichen normalisierten Einzelgrenzwerten und n=3 Wsv=Wge=Wv3=1/n=1/3

Bei unterschiedlichen normalisierten Einzelgrenzwerten $Sg_n$ werden die normalisierten Zuverlässigkeitsscores

$$S_n = \frac{Svn - Svn_{min}}{Svn_{max} - Svn_{min}}$$

selbst auf einen gemeinsamen gleichen normalisierten Grenzwert (GNG) adaptiert, so dass wieder mit gleichen Wichtungsfaktoren gearbeitet werden kann.

Bei dieser Art der Normalisierung $Sn_{min} = 0$ und $Sn_{max} = 1$ 1 kann dazu die Auflösung des Polynoms 2. Ordnung

$$GNG = a_n Sg_n^2 + (1 - a_n)Sg_n$$

zur Berechnung des Wertes $a_n$ anhand der bekannten Werte für GNG und $Sg_n$ (Normalisierter Score-Grenzwert der n-ten Verifizierung) dienen.

Als GNG kann z.B. ein Mittelwert der einzelnen, unterschiedlichen normalisierten Grenzwerte angenommen werden.

Damit berechnet sich dann der Entscheidungswert:

$$Ew = W_{v1} * (a_1 Sg_1^2 + (1 - a_1)Sg_1) + W_{v2} * (a_2 Sg_2^2 + (1 - a_2)Sg_2) + W_{v3} * (a_3 Sg_3^2 + (1 - a_3)Sg_3) + \ldots + W_{vn} * (a_n Sg_n^2 + (1 - a_n)Sg_n)$$

Die Wichtungsfaktoren können nun bei gleicher Bedeutung der verschiedenen Verifizierungsverfahren wieder gleich auf 1/n gesetzt werden.

Über- oder unterschreitet nun Ew einen festgesetzten Grenzwert für GNG, so können nun Steuerbefehle z.B.

zur 3D-Generierung eines Sprecherabbildes in 60 weitergeleitet oder abgeblockt. Ähnliches kann geschehen, wenn nur Aktivierungs- bzw. Deaktivierungssignale weitergeleitet werden sollen.

In den Archivspeicher 90 für Absenderbilder/-videos werden aus der empfangenen Nachricht nur die den entsprechenden Adressen zugeordneten Absenderbilder abgelegt, die erfolgreich verifiziert wurden, so dass folgend bei Bedarf zur Generierung des 3D-Abbildes (siehe a, b, c) auch nur die Abbilder/Videos verwendet werden, deren vorherige Verifizierungen im Vergleich zum über die Adresse ermittelten Referenzmodell aus 50 oder 90 einen Mindestwert an Übereinstimmung (Konfidenz) mit dem Referenzmodell ergeben hatten.

1) Bei einer 2D-Aufnahme einer Videonachricht eines Einzelsprechers wird im vorgesehenen Verfahren davon ausgegangen, dass damit für jedes Bild der Videosequenz ein für eine 3D-Darstellung notwendiges Bild für das rechte (Rechtsbild) oder linke Auge (Linksbild) schon vorhanden ist.

Ein Video wird hier als eine Sequenz von Einzelbildern aufgefasst.

Zur vollständigen 3D-Darstellung ist also ein zweites Bild einer Person bzw. deren Gesicht für das jeweils andere Auge zu generieren. Zur beispielhaften, vereinfachten Beschreibung des 3D-Generierungsverfahrens wird im Folgenden davon ausgegangen, dass das vorhandene Bild als vorhandenes rechtes Bild (Rechtsbild) gewertet wird. Das linke Bild (Linksbild) muss also im Weiteren noch für jedes Bild der Videosequenz generiert werden.

Bevor jedoch das für die 3D-Generierung notwendige Linksbild erstellt wird, ist es sinnvoll, zu prüfen, ob der auf mind. einem Bild der Videosequenz abgebildete Sprecher oder mindestens einer der abgebildeten Sprecher einem ggf. früher erhaltenen und in 50 oder 90 gespeicherten, über die Absenderadresse identifizierbaren Abbild entspricht.

Bei erfolgreicher Verifizierung des Einzelsprechers, werden Umrisse und Koordinaten der Position des dem Absender entsprechenden Abbildes gespeichert, und das Rechtsbild wird in einem ersten Schritt vollständig in das Linksbild kopiert, was allein noch nicht zu einem 3D-Effekt führt. In den folgenden Schritten wird das Abbild des Sprechers aus dem nun neuen Linksbild gem. den gespeicherten Umrissen und den Koordinaten der Position herausgeschnitten und durch ein in der Größe angepasstes Abbild des gleichen Sprechers der Nachricht aus einer weiter links liegenden Perspektive ersetzt. Verfahren zum automatischen Bestimmen von Umrissen, Herausschneiden, Vergrößern, Verkleinern und Einfügen von Objekten in Bilder dürfen dazu als bekannt vorausgesetzt werden.

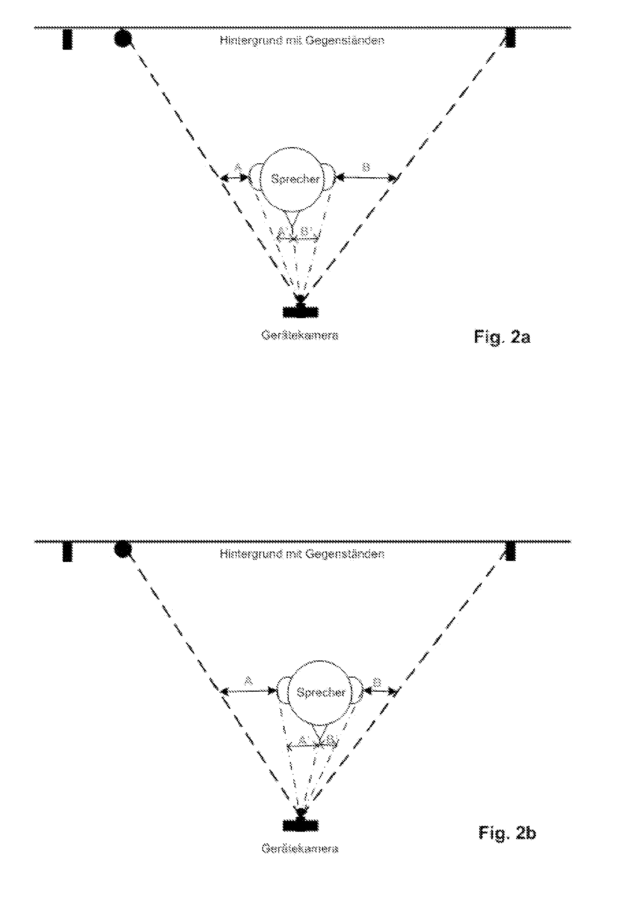

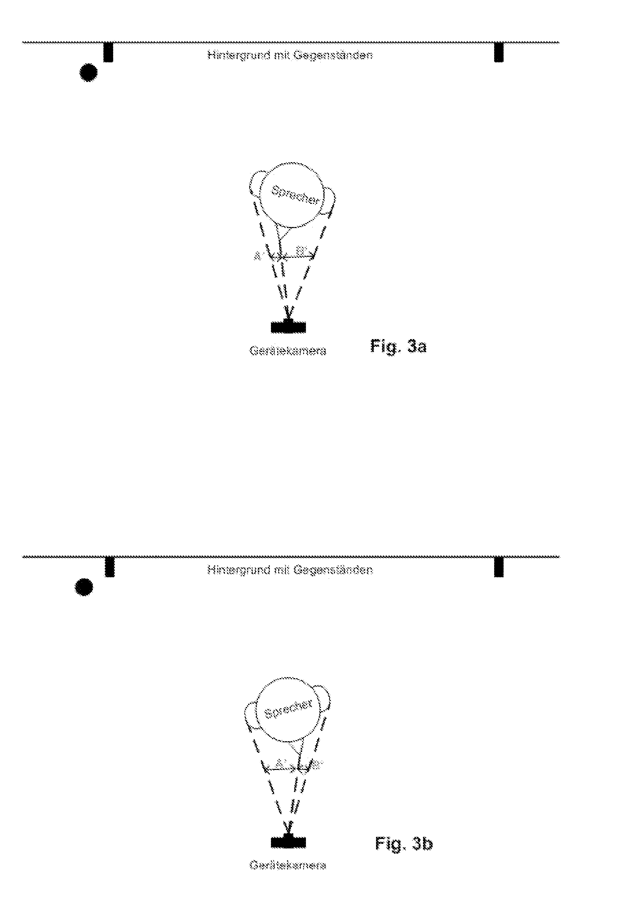

Das Abbild (Ausschnitt) des gleichen Sprechers der Nachricht aus einer weiter links liegenden Perspektive wird nun für jedes Einzelbild der Videosequenz aus anderen Bildern der Videosequenz in denen gem. Fig. 2b oder Fig. 3b gewonnen, aus denen gem. der Zeichnung anhand der verkürzten Abstände B und/oder B' und verlängerten Abstände A und/oder A' hervorgeht, dass der Aufnahmewinkel sich weiter links von der Aufnahmeposition des ursprünglichen Rechtsbildes befindet. Dabei kann gem. der im Abbild dargestellten Gesichtsgröße ein möglicher Maximalwert und/oder Minimalwert für das Verhältnis zwischen B, B', A, A' aus Fig.2a und jeweils B, B', A, A' aus Fig. 2b bzw. zwischen B, A, aus Fig.3a und jeweils B, A, aus Fig. 3b eingestellt werden, damit die virtuelle 3D-Stereobasis sind nicht wesentlich vom durchschnittlichen Augenabstand unterscheidet. Werden die Linksbilder aus der aktuell empfangenen Videosequenz gewonnen, so kann der Sprecher für jedes zusätzliche Einzelbild mithilfe oben beschriebener Verfahren verifiziert werden. Dabei werden neben den in Fig. 2 und 3 dargestellten horizontalen Verhältnissen zwischen B, B', A, A' auch vertikale Größenverhältnisse ermittelt, um zu gewährleisten, dass das zusätzliche Linksbild aus einem Aufnahmebereich gewonnen wird, bei dem die horizontale Ebene sich nicht oder innerhalb festgelegter Grenzwerte nur gering von dem horizontalen Aufnahmeebene des zugeordneten Rechtsbildes unterscheidet.

Werden die Linksbilder aus der aktuell empfangenen Videosequenz gewonnen, so kann der Sprecher für jedes zusätzliche Einzelbild mithilfe oben beschriebener Verfahren verifiziert werden. Wird für einzelne Rechtsbilder aus der Videosequenz kein weiteres Linksbild, d.h. kein weiteres Bild aus einer weiter links liegenden Position gefunden, so kann in diesen Grenzfällen auch zum nun vorhandenen (das Rechtsbild war in das Linksbild kopiert worden) Linksbild ein passendes Rechtbild aus einem anderen Bild der Videosequenz unter Berücksichtigung der Relationen zwischen B, B', A, A' aus Fig.2b und jeweils B, B', A, A' aus Fig. 2a bzw. zwischen B, A, aus Fig.3b und jeweils B, A, aus Fig. 3a ergänzt werden. Hier sollten dann bei der Auswahl ebenfalls die o.g. Minimal- und/oder Maximalwerte eingehalten werden.

Liegt die durch die Minimal- und/oder Maximalwerte festgelegte virtuelle Stereobasis nicht innerhalb bestimmter Grenzen, so kann dies zu einem Pulsieren des 3D-Effektes führen.

Fehlende zu ergänzende Links- oder Rechtsbilder des Absenders können zusätzlich aus den in 90 gespeicherten und verifizierten Bildern/Videos historischer Nachrichten des gleichen Absenders gewonnen werden.

Wird für einzelne Rechtsbilder aus der Videosequenz kein weiteres Linksbild, d.h. kein weiteres Bild aus einer weiter links liegenden Position gefunden, so kann in diesen Grenzfällen auch zum nun vorhandenen (das Rechtsbild war in das Linksbild kopiert worden) Linksbild ein passendes Rechtsbild aus einem anderen Bild der Videosequenz unter Berücksichtigung der Relationen zwischen B, B', A, A' aus Fig.2b und jeweils B, B', A, A' aus Fig. 2a bzw. zwischen B, A, aus Fig.3b und jeweils B, A, aus Fig. 3a ergänzt werden. Hier sollten dann bei der Auswahl ebenfalls die o.g. Minimal- und/oder Maximalwerte eingehalten werden.

Liegt die durch die Minimal- und/oder Maximalwerte festgelegte virtuelle Stereobasis nicht innerhalb bestimmter Grenzen, so kann dies zu einem Pulsieren des 3D-Effektes führen.

Fehlende zu ergänzende Links- oder Rechtsbilder des Absenders können zusätzlich aus den in 90 gespeicherten und verifizierten Bildern/Videos historischer Nachrichten des gleichen Absenders gewonnen werden.

2) Liegt aus der empfangenen Nachricht nur ein einzelnes (z.B. als Rechtsbild gewertetes) Abbild des möglichen Sprechers (Foto) vor, so wird dieses Abbild gem. der oben beschriebenen Verfahren verifiziert und deren Ergebnisse, ggf. wie oben beschrieben, kombiniert. Nach erfolgreicher Verifizierung werden auch hier Umrisse und Koordinaten der Position des dem Absender entsprechenden Abbildes gespeichert, und das Rechtsbild wird in einem ersten Schritt vollständig in das noch für das 3D-Format zu generierende Linksbild kopiert, und das Abbild des Sprechers aus dem nun neuen Linksbild wird gem. den gespeicherten Umrissen und den Koordinaten der Position herausgeschnitten und durch ein in der Größe angepasstes Abbild des gleichen Sprechers der Nachricht aus einer weiter links liegenden Perspektive ersetzt.

Das Abbild (Ausschnitt) des gleichen Sprechers der Nachricht aus einer weiter links liegenden Perspektive wird nun aus Bildern und/oder Videos gewonnen, die aus früheren Nachrichten stammen und in 90 gemeinsam mit Referenz auf die Absenderadresse und Informationen, die die Recht-/Links-Proportionen des Abbildes des Absenders repräsentieren (z.B. Quotient aus A' und B'), abgelegt wurden. Zur Überwachung der Rechts-/Links-Proportionen können die Verhältnisse der Abstände verschiedener markanter Bereiche des Gesichts, wie z.B. Augen, Mund, Ohren, Nase, Kinn usw. ausgewählt, markiert und nach der Berechnung der proportionsbestimmenden Merkmale werden diese mit Bezug auf das jeweilige Bild in 90 archiviert.

Bei der Auswahl des zu ergänzenden Bildes wird darauf geachtet, dass gem. der im Abbild dargestellten Gesichtsgröße ein möglicher Maximalwert und/oder Minimalwert für das Verhältnis zwischen B, B', A, A' aus Fig.2a und jeweils B, B', A, A' aus Fig. 2b bzw. zwischen B, A, aus Fig.3a und jeweils B, A, aus Fig. 3b nicht über bzw. unterschritten wird, damit auch hier die virtuelle 3D-Stereobasis sich nicht wesentlich vom durchschnittlichen Augenabstand unterscheidet.

In der beschriebenen Methodik kann natürlich auch das rechte Bild als vorhandenes rechtes Bild in das linke Bild kopiert werden, wobei letzteres dann wie oben für das linke Bild beschrieben modifiziert wird.

Die aus mindestens zwei 2D-Abbildern mit verschiedenen Perspektiven generierten 3D-Abbilder des Sprechers werden in beiden Fällen (Video und Foto) über Normalisierungsverfahren wieder in ihrer Größe an die Sprechergröße in der 2D-Nachricht angepasst und entsprechend der Orientierung des Sprechers in der Originalnachricht in dessen digitale bildliche bzw. Videodarstellung in der nun modifizierten Originalnachricht (43b, 44b) eingefügt, wobei unter Einfügung grundsätzlich auch das Hinzufügen mindestens eines zweiten Bildes aus einer weiteren Perspektive zu verstehen ist.

Die Orientierung des Sprechers in der 2D-Nachricht wird über die Auswertung der Position wesentlicher Merkmale von Gesicht und/oder Körper, wie z.B. die Lage von Haaransatz, Augen, Nase, Lippen und/oder Ohren im Verhältnis zum Abstand von der Kopfbegrenzung ermittelt, wobei ein nahezu symmetrischer Gesichtsaufbau bei direkter Ausrichtung Gesichts auf mindestens eine aufnehmende Kamera vorausgesetzt wird.

Da die Orientierung des Sprechers in der 3D-Darstellung der ursprünglichen Orientierung in der 2D-Darstellung dynamisch angepasst wird, kann auch die Darstellung von Lippenbewegungen für die Einzelbilder einer Videonachricht, die dann jeweils die gleiche Orientierung aufweisen, unter Akzeptanz geringer Qualitätseinbußen direkt übernommen werden.

Beim computergestützten, automatischen Einfügen von bildlichen 3D-Darstellungen einer Person in einen Bildausschnitt, welcher ursprünglich durch eine 2D-Darstellung der gleichen Person belegt war, besteht eine geringe Gefahr, dass an den Rändern der eingefügten bildlichen Darstellung dieser Person Bereiche entstehen, welche weder durch die neue bildliche Darstellung der Person noch durch den ursprünglichen Originalhintergrund abgedeckt werden. Hier kann eine leichte Vergrößerung der Einfügung und ggf. des ersten Originalbildes im berechneten Ausschnitt um einen festgelegten Wert oder eine dynamische Vergrößerung je nach berechneter Fehlabdeckung durchgeführt werden, bis der Grenzbereich des größten Fehlabdeckungsbereichs abgedeckt ist. Umgekehrt ist ebenfalls eine geringfügige Komprimierung des Hintergrundes zum eingefügten Abbild möglich, wie z.B. in DE69628662T2 beschrieben.

Reine Textnachrichten (41) verfügen im Allg. im Original nicht über zu ersetzende oder verifizierbare Bild- oder Videoaufzeichnungen. Um diese ergänzend mit einem 3D-Abbild oder einer Folge von 3D-Abbildern (Video) des Absenders auszustatten, die bei Anzeige/Wiedergabe der Nachricht abgespielt werden, kann hier direkt die Adresse des Absenders benutzt werden, um die für die Generierung der eines ergänzenden 3D-Abbildes (41b) notwendigen verifizierten Bilder aus 90 zu ermitteln. Im Datenbereich 90 werden dafür alle bereits erhaltenen und verifizierten Abbilder eines Absenders an seine Kennung/Adressinformation gekoppelt abgespeichert und bei Bedarf im Fall der Generierung von 3D-Abbildern für diesen Sprecher oder zum Zwecke der Verifizierung neuer Bildinformationen eines Sprechers anhand der der Originalnachricht zugeordneten Adresskennung abgerufen.

Auch Sprachnachrichten (42) verfügen im Allg. im Original nicht über zu ersetzende oder verifizierbare Bild- oder Videoaufzeichnungen. Jedoch kann hier zur Verifizierung (70) des Sprechers, d.h. zur Überprüfung, ob das der Absenderadresse/Kennung der aktuellen Nachricht ggf. zugeordnete Referenzstimmmodell aus 90 und/oder 50 der Stimme des Sprechers der aktuellen Sprachnachricht entspricht. Ist dies der Fall, so wird die dem Sprecher abgesichert zugeordnete Adressinformation dazu genutzt, um dessen ggf. in 90 vorhandenen verifizierten Abbilder zur Generierung eines ergänzenden 3D-Abbildes (60) abzurufen. Dieses generierte 3D-Abbild wird nun genutzt, um einen im Abbild dem Absender gleichenden Avatar zu generieren, welcher anhand der Auswertung der phonetischen Merkmale der Sprachnachricht unter Adaption der Mundbewegungen die gesprochene Nachricht gem. bekannter Sprachsyntheseverfahren (Quelle-Filter-Modell, Formantsynthese, Akustisches Modell, Artikulatorische Synthese, Overlap Add etc.) wiedergibt.

In Fig. 1 wird schwerpunktmäßig der Prozess der Generierung von 3D Abbildern aus 2D-Bildern/Bildfolgen eines Absenders dargestellt.

Ergänzend dazu können in 90 gespeicherte Phoneme/Phonemfolgen/Silben/Wörter/Phrasen der Sprecher von Sprach- und/oder Videonachrichten genutzt werden, um gem. der übermittelten Adresskennung (hier auch als Sprecherkennung genutzt) auf Texte aus 41 das Sprachsyntheseverfahren Unit Selection anzuwenden.

Auf Grund der ermittelten Absenderadresse der Textnachricht werden nun entsprechende Sprachfragmente des analog über seine Stimme verifizierten (siehe 70) Absenders in 90 gesucht, um aus dem übermittelten Text eine Sprachnachricht zu generieren. Ein ebenfalls mithilfe der Absenderadresse aus 2D Abbildern des Absenders generierter 3D-Avatar (s.o.) kann nun über die so generierte Sprachausgabe des Textes unter Adaption der Mundbewegungen die Textnachricht akustisch wiedergeben. Auf diese Art wird aus einer einfachen Textnachricht eine Sprach- und 3D-Videonachricht generiert.

So, wie aus gesammelten Stimmfragmenten des Absenders eine Sprachausgabe von Textnachrichten mit dessen Stimme generiert werden kann, ist prinzipiell durch den Empfänger der Nachricht auch eine andere Stimme (z.B. durch Modifikation der ursprünglich ermittelten Absenderadresse oder eines Identifikator, welche prinzipiell als Verweis auf die gewünschte Stimme verwendet wird, auf einen anderen Wert) für die Nachricht einstellbar, welche ergänzend mit Hilfe von in den Text eingefügten Kennzeichnungen emotionale Schwankungen der Sprachausgabe zum Ausdruck bringen kann.

Abbild und/oder Stimme des Absenders können z.B. auf Wunsch des Nachrichtenempfängers oder des Betreibers des Mailboxsystems modifiziert werden. Dazu wird die aus der empfangenen Nachricht ermittelte Absenderkennung/-adresse durch eine vom Nachrichtenempfänger einstellbare Adresse/Kennung (100) ersetzt und zur 3D-Generierung der Einzelbilder bzw. zur Generierung der Wiedergabestimme werden gem. der nun vorgegebenen Adresse/Kennung Bild- bzw. Stimmfragmente zur Generierung der 3D-Abbilder bzw. Sprachausgabe eines neuen Sprechers in 90 gesucht.

Neben der direkten Auswahl des Abbildes und/oder der Stimme während der Wiedergabe können Auswahlparameter die Modifikationen im vom Empfänger verwalteten Nutzerprofil (100) enthalten.

Hier ist ebenfalls der Speicherort für Informationen, die weitere Formen der 3D-Generierung definieren.

Im einfachsten Fall wird, wie oben beschrieben, aus einer 2D-Videonachricht des Absenders durch Auswertung von Absenderinformationen (z.B. über die übermittelte Absenderadresse) ein 3D-Video des Absenders generiert bzw. aus einem der Nachricht beiliegenden 2D-Einzelbild des Absenders wird ebenfalls durch Auswertung von Absenderinformationen (z.B. über die übermittelte Absenderadresse) ein aus zwei 2D-Bildern bestehendes 3D-Einzelbild des Absenders generiert.

Eine andere Einstellung im Nutzerprofil kann bedeuten, dass an Stelle eines empfangenen mit einer Sprachnachricht gekoppelten 2D-Einzelbildes oder einer bildlosen Sprachnachricht ein schon einmal generiertes und in 90 abgespeichertes Vorzugs-3D-Video des Absenders noch einmal mit der Sprachnachricht der aktuell empfangenen Nachricht abgespielt werden soll. Da die Lippenbewegungen des aufgezeichneten Absenders nun nicht mehr synchron zum aktuell gesprochenen Nachrichtentext sind, muss eine Anpassung der Lippenbewegungen vorgenommen werden. Aus der Generierung und Anwendung von Avataren sind Visem-Phonem-Zuordnungen bekannt, bei denen zur Sprachausgabe von geschriebenem Text virtuelle, künstliche Charaktere diesen Text unter entsprechend modellierten Lippenbewegungen ansagen. Ebenfalls bekannt sind Spracherkennungsverfahren, die aus einem gegebenen Sprachfluss nicht nur Wörter sondern ebenfalls Phonemfolgen (Lautfolgen) extrahieren können. Für jede Sprache/ jeden Dialekt existiert eine begrenzte Anzahl möglicher Phoneme und damit auch eine begrenzte Anzahl von möglichen Phonemübergängen. Im Deutschen wird dialektabhängig von ca. 40 Phonemen ausgegangen. Im gegebenen Fall werden aus der gewählten archivierten (historischen) Videonachricht die Phonemfolgen eines Absender o.a. Sprechers mithilfe des Spracherkennungssystems extrahiert und gemeinsam synchron mit den entsprechenden Mimiksequenzen als Phonem-Visem-Kombinationen abgespeichert. Gleiches wird für die Speicherung von Phonem-Übergängen und den entsprechenden Visemen dazu vollzogen. Als Viseme eines Absenders o.a. ggf. auch künstlichen Sprechers können hier z.B. ganze Bildsequenzen inkl. Sprecherhintergrund als auch nur die ausgeschnittenen 3D-Gesichter oder Mundausschnitte betrachtet werden. Einzelnen Sprechern zugeordnete Visemkollektionen werden ebenfalls mit den Adressen dieser Sprecher verknüpft. Danach wird die aktuelle, in eine Videonachricht umzuwandelnde Sprachnachricht ebenfalls nach Phonemfolgen und -übergängen analysiert. Sind alle Phonemfolgen und Übergänge mindestens einmal in der archivierten Videonachricht enthalten, so wird entsprechend den Phonemfolgen und - übergängen der aktuellen Sprachnachricht aus die entsprechende Bild-/Visemfolge synchron zur Phonemfolge der aktuellen Nachricht hinzugefügt.

Sind in einer archivierten Vorzugs-Videonachricht nicht alle Phonemfolgen und/oder -übergänge der aktuellen Nachricht enthalten, so wird unter Auswertung der Phonemfolgen und -übergänge nach weiteren archivierten 3D-Botschaften des gleichen Absenders gesucht, die die zusätzlich benötigten Phonemfolgen und -übergänge enthalten. Aufgrund unterschiedlicher Hintergründe und Farbnuancen werden gem. obigen Beispielen aus den entsprechenden Visemfolgen nur die Gesichts- oder Kopfdarstellungen des Sprechers herausgeschnitten und unter Größen-/Farb- und/ oder Randadaption in Bildsequenzfolgen der Vorzugsvideonachricht eingefügt.

Werden 3D-Abbilder anderer Personen als die der Absender in den vorgegebenen Bildbereich vor dem Originalhintergrund eingefügt, so kann, wie schon einmal beschrieben, entweder eine Vergrößerung der Einfügung um einen festgelegten größeren Wert oder wiederum eine dynamische Vergrößerung je nach berechneter Fehlabdeckung durchgeführt werden, bis die Grenze des Fehlabdeckungsbereiches erreicht ist.

So wie hier für Nachrichtensprecher beschrieben können auch über Bilderkennungsverfahren identifizierte statische Objekte in Bild- und/oder Videonachrichten mit Kennungen versehen und in der Nachricht zu 3D-Abbildern (z.B. Gebäude als Hintergrundobjekte) modifiziert werden.

Eine zusätzliche Ergänzung bildet die Einfügung eines anderen Hintergrundes in Abhängigkeit vom festgestellten Aufenthaltsort des Absenders der Nachricht. Wird z.B. beim Hinterlassen und/oder Versenden einer Bild- oder Videonachricht über ein mobiles Endgerät unter Auswertung der Roaming-Informationen festgestellt, dass der Absender der Nachricht sich in einem bestimmten Land, Provinz oder Ort befindet, kann in Abhängigkeit von diesem Ort ein neues Hintergrundbild eingefügt werden. Dazu wird z.B. im Text-, Voice- und/oder Video-Mailboxsystem zusätzlich beim Hinterlassen einer entsprechenden Nachricht eine ortsbestimmende Information abgespeichert.

Die auf diese Art mit der hinterlassenen Nachricht gekoppelte ortsbestimmende Information kann

1. beim Hinterlassen der Nachricht von einem mobilen Endgerät bzw. einem Endgeräte, welches die Erfassung der folgenden Informationen ermöglicht die

a) Cell-ID der Cell-of-Origin UND/ODER
b) die Cell-IDs umgebender Funkzellen mit entsprechenden Signallaufzeiten zu den benachbarten Funkmasten der Basisstationen.
UND/ODER
c) die aus diesen Signalen berechnete Position bzw. Positionsbereich
enthalten.

Die Laufzeiten von Signalen zu umgebenden Funkmasten werden ebenfalls im sog. A-GPS-Verfahren genutzt, um die Lokalisierung per GPS-Verfahren zu unterstützen

2. beim Hinterlassen der Nachricht von einem Endgerät, welches keine ortsbestimmenden Funksignale empfängt, eine Landeskennung und/oder eine Ortvorwahl enthalten, aus welchen ggf. der Standort des Endgerätes abgeleitet werden kann.

3. beim Hinterlassen der Nachricht von einem VoIP-System mindestens eine IP-Adresse und der Zeitpunkt des Hinterlassens einer Nachricht und/oder DSLAM-Portadressen enthalten, aus welchen ebenfalls eine Ortsbestimmung abgeleitet werden kann (http://www.voip-info.de/wissen/_Artikel_Allgemein_2011.php?page=3).

Die ortsbestimmende und/oder Absenderadresskennung dienen zusätzlich dazu, um der Nachricht einen ortsabhängigen bzw. absenderabhängigen Geräuschhintergrund hinzuzufügen, welcher die Einbettung des Sprechers in eine dreidimensionale Umgebung verstärkt, indem abhängig von Ort und/oder Absender verschiedenen mehrkanalig aufgezeichnete Hintergrundgeräusche der modifizierten Nachricht hinzugemischt werden. So kann ein vorgespeicherter Hintergrund in das Bild eingemischt werden, wobei bekannt verfahren zum Ersetzten eines Hintergrundes gewählt werden.

Das 3D-Modell eines Sprechers besteht vorzugsweise aus einer Vielzahl von 2D-Abbildern, die gemeinsam mit Daten gespeichert werden, die die Perspektive/Ausrichtung eines einzelnen 2D-Abbildes beschreiben.

Das in Fig. 1 abgebildete Mailboxsystem 30, die 3D-Generierung 60, die Sprechererkennung 70 und die Gesichtserkennung 80 können sich auch lokal vollständig oder in Teilen auf dem Endgerät befinden. In dem Fall, dass das Mailboxsystem inkl. 90 sich auf dem Endgerät befindet stehen in 90 ggf. nur Absenderdaten zu Verfügung, mit denen der Nutzer des Endgerätes Kontakt hatte.

In einem netzbasierten Mailboxsystem 30 stehen unter Umständen auch Absenderdaten (z.B. Bilder, Videos, Adressdaten) aus Nachrichten zur Verfügung, die an andere Empfänger versandt wurden.

**Patentansprüche**

1. Verfahren zur Steuerung eines digitalen Nachrichtensystem in dem eine Vielzahl von personengebundenen Nachrichten auf einem Speichersystem (30) gespeichert wird, wobei die Nachrichten mit Absenderadressen versehen sind, wobei ein Teil der Nachrichten ferner digitale Bilddaten oder Videodaten umfasst, mit den Schritten:

   - Identifizieren von Bildbereichen mit Gesichtern und/oder Personen in den digitalen Bilddaten oder Videodaten in den Nachrichten (80) auf dem digitalen Nachrichtensystem, die die gleiche Absenderadresse aufweisen;
   - Bestimmen von digitalen absenderrelevanten Bildbereichen (80), die die Person des Absenders digital grafisch darstellen, aus den identifizierten Bildbereichen auf der Basis von Referenzbildern, die auf einem Speichersystem abgelegt sind,
   und/oder
   Identifizieren von Bildern auf der Basis von Sprechererkennungsverfahren (70), Sprecherverifizierungsverfahren oder Sprecheridentifizierungsverfahren unter Berücksichtigung von Sprachdaten und Bilddaten in der Nachricht, von Referenzsprachdaten und/oder von Sprachdaten in den Videodaten, die miteinander verglichen werden,
   und/oder durch Bestimmen der Häufigkeit des Auftretens von Bildbereichen in Nachrichten mit der gleichen Absenderadresse;
   - Verwenden des absenderrelevanten Bildbereichs, um ein digitales grafisches Modell eines Sprechers zu erzeugen (60), das den Inhalt der Nachricht durch Animation der Mundbereiche bei der Wiedergeben der Nachricht wiedergibt.

2. Das Verfahren nach dem vorhergehenden Anspruch, wobei die identifizierten Bildbereiche verwendet werden, um ein 3D-Modell zu erzeugen.

3. Das Verfahren nach dem vorhergehenden Anspruch, **dadurch gekennzeichnet, dass** wenn ein Bildbereich als absenderrelevant identifiziert wird, folgende Schritte ausgeführt werden:

   - Speicherung des identifizierten absenderrelevanten 2D-Bildbereiches in Zusammenhang mit der Absenderadresse und Parameter, die die Perspektive des Absenderabbildes charakterisierenden,
   - Übergabe des absenderrelevanten 2D-Bildbereiches und weiterer absenderrelevanter Bildbereiche aus vergangenen Nachrichten aus dem Speichersystem an ein Modul zur Generierung von 3D-Bilddaten,
   - Ermittlung der Perspektive/Ausrichtung des 2D-Abbilds anhand von abgebildeten Körperproportionen,
   - Suche eines zweiten 2D-Abbildes für den 3D-Eindruck; mit einer notwendigen zweiten Ausrichtung durch Auswertung der Verhältnisse von Körperproportionen, das durch Parameter gekennzeichnet ist, welche eine andere Perspektive in der gleichen horizontalen Ebene beschreiben,
   - Durchführen von Größen- oder Farbadaption des gefundenen und einzufügenden Bildes,
   - Generierung mindestens eines 3D-Abbildes des Sprechers durch Ergänzung des Original 2D-Bildes mit einem aus diesem Bild kopierten zweiten Bild, in welchem das Absenderabbild ausgeschnitten und durch ein Bild aus einer anderen Perspektive ersetzt wird.

4. Das Verfahren nach dem vorhergehenden Anspruch, wobei bei der Suche eines zweiten 2D-Abbildes
   zuerst in der aktuellen Nachricht nach Bildern aus einer anderen Perspektive, vorzugsweise unter Anwendung von Gesichtserkennungsverfahren bei der Anwesenheit mehrerer Personen, gesucht wird,
   sind in der aktuellen Nachricht keine weiteren verwertbaren Bilder aus einer anderen Perspektive vorhanden, so erfolgt die Suche im Speichersystem, es erfolgt dabei vorzugsweise eine Prüfung der Proportionen von Merkmalen des Absenderabbildes und/oder ob die zusätzlich gefundenen Bilder aus einer anderen Perspektive auf Einhaltung vorgegebene Grenzwerte einhalten, insbesondere Grenzwerte, die eine horizontale Aufnahmeebene, insbesondere Aufnahmewinkel in der Vertikalen, und eine vertikale Aufnahmeebene, insbesondere Aufnahmewinkel in der Horizontalen beschreiben.

5. Das Verfahren nach einem oder mehreren der vorhergehenden Ansprüche, wobei die Sprachdaten der Nachricht und die Sprachdaten der Videonachricht verglichen werden und/oder eine Vielzahl von Sprachdaten der Videonachrichten miteinander verglichen werden, um den relevanten Bildbereich oder das Bild der Videonachricht zu finden, wenn es eine Überlappung der Sprachnachrichten gibt.

6. Das Verfahren nach einem oder mehreren der vorhergehenden Ansprüche, wobei die 3D-Generierung, die Sprechererkennung, die Gesichtserkennung vollständig oder auch in Teilen auf einem Endgerät oder auf einem über ein Netzwerk zugänglichen Server ablaufen, wobei die Ablage von Informationen, die verschiedene Perspektive der Abbilder des Absenders in den Nachrichten kennzeichnen, im Speichersystem eines Servers oder lokal auf einem Speicher eines mobilen Endgerätes abgelegt sind.

7. Das Verfahren nach einem oder mehreren der vorhergehenden Ansprüche, wobei das 3D-Modell aus einer Vielzahl von 2D-Abbildern besteht, die gemeinsam mit Daten gespeichert werden, die die Perspektive/Ausrichtung eines einzelnen 2D-Abbildes beschreiben.

8. Das Verfahren nach einem oder mehreren der vorhergehenden Ansprüche, wobei ein Einfügen eines anderen Hintergrundes in Abhängigkeit vom festgestellten Aufenthaltsort des Absenders der Nachricht gewählt wird.

9. Digitales Nachrichtensystem in dem eine Vielzahl von personengebundenen Nachrichten auf einem Speichersystem gespeichert wird, wobei die Nachrichten mit Absenderadressen versehen sind, wobei ein Teil der Nachrichten ferner digitale Bilddaten oder Videodaten umfasst, mit den Komponenten:

- Einheit (80) zum Identifizieren von Bildbereichen mit Gesichtern und/oder Personen in den digitalen Bilddaten oder Videodaten der Nachrichten, die die gleiche Absenderadresse aufweisen;
- Einheit (80) zum Bestimmen von digitalen absenderrelevanten Bildbereichen, die die Person des Absenders digital grafisch darstellen, aus den identifizierten Bildbereichen auf der Basis von Referenzbildern, die auf einem Speichersystem abgelegt sind, und/oder
auf der Basis von Spracherkennungsverfahren (70) unter Berücksichtigung von Sprachdaten in der Nachricht, in Referenzsprachdaten und/oder von Sprachdaten in den Videodaten, die miteinander verglichen werden, und/oder
durch Bestimmen der Häufigkeit des Auftretens von Bildbereichen in Nachrichten mit der gleichen Absenderadresse;
- Einheit (60) zum Verwenden des absenderrelevanten Bildbereichs, um ein digitales grafisches Modell eines Sprechers zu erzeugen, das den Inhalt der Nachricht durch Animation von Mundbereichen wiedergibt.

10. Digitales Nachrichtensystem nach dem vorhergehenden System-Anspruch, wobei die identifizierten Bildbereiche verwendet werden, um eine 3D-Modell zu erzeugen.

11. Digitales Nachrichtensystem nach dem vorhergehenden System-Anspruch, **gekennzeichnet, durch** eine:

- Schnittstelle zur Speicherung des identifizierten absenderrelevanten 2D-Bildbereiches in Zusammenhang mit der Absenderadresse und Parameter, die die Perspektive des Absenderabbildes charakterisieren,
- Schnittstelle zur Übergabe des absenderrelevanten 2D-Bildbereiches und weiterer absenderrelevanter Bildbereiche aus vergangenen Nachrichten aus dem Speichersystem an ein Modul zur Generierung von 3D-Bilddaten,
- Mittel zur Ermittlung der Perspektive/Ausrichtung des 2D-Abbilds anhand von abgebildeten Körperproportionen,
- Mittel zur Suche eines zweiten 2D-Abbildes für den 3D-Eindruck; mit einer notwendigen zweiten Ausrichtung **durch** Auswertung der Verhältnisse von Körperproportionen, das **durch** Parameter gekennzeichnet ist, welche eine andere Perspektive in der gleichen horizontalen Ebene beschreiben,
- Mittel zur Generierung mindestens eines 3D-Abbildes des Nachrichtensprechers **durch** Ergänzung des Original 2D-Bildes mit einem aus diesem Bild kopierten zweiten Bild, in welchem das Absenderabbild ausgeschnitten und **durch** ein Bild aus einer anderen Perspektive ersetzt wird.

12. Digitales Nachrichtensystem nach dem vorhergehenden System-Anspruch, wobei das Mittel zur Suche so ausgebildet ist, das bei der Suche eines zweiten 2D-Abbildes zuerst in der aktuellen Nachricht nach Bildern aus einer anderen Perspektive vorzugsweise unter Anwendung von Gesichtserkennungsverfahren bei Anwesenheit mehrerer Personen gesucht wird,
sind in der aktuellen Nachricht keine weiteren verwertbaren Bilder aus einer anderen Perspektive vorhanden, so erfolgt die Suche im Archivspeicher des Mailsystems, es erfolgt dabei vorzugsweise eine Prüfung der Proportionen von Merkmalen des Absenderabbildes der zusätzlich gefundenen Bilder aus einer anderen Perspektive auf Einhaltung vorgegebener Grenzwerte, insbesondere Grenzwerte, die eine horizontale Aufnahmeebene, insbesondere Aufnahmewinkel in der Vertikalen, und eine vertikale Aufnahmeebene, insbesondere Aufnahmewinkel in der Horizontalen, beschreiben.

**13.** Digitales Nachrichtensystem nach einem oder mehreren der vorhergehenden System-Ansprüche, umfassen Mittel, die die Sprachdaten der Nachricht und die Sprachdaten der Videonachricht vergleichen und/oder eine Vielzahl von Sprachdaten der Videonachrichten miteinander verglichen werden, um den relevanten Bildbereich der Videonachricht zu finden, wenn es eine Überlappung der Sprachnachrichten gibt.

**14.** Digitales Nachrichtensystem nach einem oder mehreren System-Ansprüchen, wobei die Mittel zur 3D-Generierung, zur Sprechererkennung, zur Gesichtserkeennung vollständig oder in Teilen auf einem Endgerät oder auf einem über ein Netzwerk zugänglichen Server angeordnet sind, wobei die Ablage von Informationen, die die verschiedenen Perspektiven der Abbilder des Absenders in den Nachrichten kennzeichnen, in einem Speichersystem des Servers oder einem Speicher eines mobilen Endgerätes abgelegt sind.

**15.** Digitales Nachrichtensystem nach einem oder mehreren der vorhergehenden System-Ansprüche, wobei das 3D-Modell aus einer Vielzahl von 2D-Abbildern besteht, die gemeinsam mit Daten auf dem Speichersystem gespeichert sind, die die Perspektive/Ausrichtung eines einzelnen 2D-Abbildes beschreiben.

**16.** Digitales Nachrichtensystem nach einem oder mehreren der vorhergehenden System-Ansprüche, wobei ein Einfügsystem gegeben ist, das einen anderen Hintergrund in Abhängigkeit vom festgestellten Aufenthaltsort des Absenders der Nachricht einfügt.

**Claims**

**1.** A method for controlling a digital communication system in which a plurality of person-related messages is stored in a storage system (30), wherein the messages are provided with sender's addresses, wherein a part of the messages further comprises digital image data or video data, with the steps of:

- Identifying of image areas with faces and / or persons in the digital image data or video data in the message (80) on the digital communication system having the same sender's address;
- Determining of relevant digital sender image areas (80) which graphically digitally represent the person of the sender from the identified image areas on the basis of reference images which are stored on a storage system, and / or
Identifying images based on speaker recognition methods (70), speaker verification methods or speaker identification methods, in consideration of voice data and Image data In the message, of reference speech data and / or voice data in the video data, which are compared with one another,
and / or by determining the frequency of appearance of image areas in the messages with the same sender address;
- Using of the sender relevant image area to produce a digital graphical model of a speaker (60), which reproduces the contents of the message through animation of the mouth areas when replaying the message.

**2.** The method of the preceding claim, wherein the identified areas of the images are used to produce a 3D model.

**3.** The method of the preceding claim, **characterized in that** when an image area is identified as sender relevant, the following steps are performed:

- Storing of the sender identified relevant 2D image area associated with the sender address and parameters characterizing the view of the image sender,
- Transferring of the sender relevant 2D image area and further sender relevant image areas of former messages from the storage system to a module for generating of 3D image data,
- Determining the perspective I orientation of the 2D image based on body proportions shown,
- Searching for a second 2D image for the 3D impression, with a required second orientation, by evaluating the ratios of the proportions of the body which is **characterized by** parameters which describe a different perspective In the same horizontal level,
- Performing of size or color adaptation of the image detected and pasted
- Generating at least a 3D image of the speaker by supplementing the original 2D image with a second image copied from this picture, in which the sender image is cut out and replaced by a picture from a different perspective.

**4.** The method of the preceding claim, wherein within the search of a second 2D image it is firstly searched for pictures from a different perspective in the current message, preferably with the use of face recognition methods in the presence of several persons,

if in the current message no more usable pictures from a different perspective exist, the search is performed in the storage system, it is preferably carried out an examination of the proportions of characteristics of the sender image and / or whether the additionally found images from a different perspective comply with prescribed limits, in particular with values that describe a horizontal picture level, in particular vertical picture angles, and a vertical picture level, in particular horizontal picture angles.

5. The method according to one or more of the preceding claims, wherein the voice data of the message and the voice data of the video message are compared, and / or a plurality of voice data of the video messages are compared with each other to find the relevant image area or image of the video message when there Is an overlap with the voice messages.

6. The method according to one or more of the preceding claims, wherein the 3D generation, the speaker recognition, face detection run completely or in part, on a device or on an accessible server via a network, wherein the storage of Information identifying different perspectives of the Images of the sender in the messages, are stored on a storage system of a server or locally in a memory of a mobile device.

7. The method according to one or more of the preceding claims, wherein the 3D model consists of a plurality of 2D images, which are stored together with data describing the perspective / orientation of a single 2D image.

8. The method according to one or more of the preceding claims, wherein an insertion of another background is selected depending on the detected location of the sender of the message.

9. A digital communication system in which a plurality of person-related messages is stored on a storage system, wherein the messages are provided with sender's addresses, wherein part of the messages further comprises digital image data or video data, comprising the following components

- Unit (80) for identifying image areas with faces and / or persons in the digital image data or video data in the message (80) on the digital communication system having the same sender address;
- Unit (80) for Determining of relevant digital sender image areas (80) which graphically digitally represent the person of the sender from the identified image areas on the basis of reference Images which are stored on a storage system,
and / or
identifying images based on speaker recognition methods (70), speaker verification methods or speaker identification methods, in consideration of voice data and image data in the message, of reference speech data and / or voice data in the video data, which are compared with one another,
and / or by determining the frequency of appearance of image areas in the messages with the same sender address;
- Unit (60) for using of the sender relevant image area to produce a digital graphical model of a speaker (60), which reproduces the contents of the message through animation of the mouth areas when replaying the message.

10. A digital communication system according to the preceding system claim, wherein the identified areas of the images are used to produce a 3D model.

11. A digital communication system according to the preceding system claim, **characterized by** a:

- Interface for Storing of the sender identified relevant 2D image area associated with the sender address and parameters characterizing the view of the image sender,
- Interface for Transferring of the sender relevant 2D image area and further sender relevant image areas of former messages from the storage system to a module for generating of 3D image data,
- Means for Determining the perspective / orientation of the 2D image based on body proportions shown,
- Means for Searching a second 2D image for the 3D impression, with a required second orientation, by evaluating the ratios of the proportions of the body which is **characterized by** parameters which describe a different perspective in the same horizontal level
- Means for Generating at least a 3D image of the speaker by supplementing the original 2D image with a second image copied from this picture, in which the sender image is cut out and replaced by a picture from a different perspective.

12. A digital communication system according to the preceding system claim, wherein the means for searching are designed in a way that within the search of a second 2D image it is firstly searched for pictures from a different perspective in the current message, preferably with the use of face recognition methods in the presence of several persons,

If in the current message no more usable pictures from a different perspective exist, the search is performed in the storage system, it is preferably carried out an examination of the proportions of characteristics of the sender image and / or whether the additionally found images from a different perspective comply with prescribed limits, in particular with values that describe a horizontal picture level, in particular vertical picture angles, and a vertical picture level, in particular horizontal picture angles.

13. A digital communication system according to one or more of the preceding system claims, comprising means for comparing the voice data of the message and the voice data of the video message and / or for comparing a plurality of voice data of the video messages with each other to find the relevant image area or image of the video message when there is an overlap with the voice messages.

14. A digital communication system according to one or more system claims, wherein the means for 3D generation, speaker recognition, face detection completely or in parts are arranged on a device or on an accessible server via a network, wherein the storage of information, providing the different perspectives of the images of the sender in the message, are stored in a memory system of the server or a memory of a mobile device.

15. A digital communication system according to one or more of the preceding system claims, wherein the 3D model consists of a plurality of 2D images, which are stored together with information on the storage system, which describe the perspective / orientation of a single 2D image.

16. A digital communication system according to one or more of the preceding system claims, wherein an insertion system exists, which inserts a different background depending on the detected location of the sender of the message.

## Revendications

1. Un procédé de commande d'un système de communication numérique dans lequel plusieurs messages personnels sont stockées dans un système de stockage (30), dans lequel les messages sont fournis avec les adresses des expéditeurs, dans lequel une partie des messages comporte en outre des données d'image numérique ou des données vidéos, avec les étapes :

   - l'identification de zones d'image comportant des visages et/ou des personnes au sein des données d'image numérique ou des données vidéos au sein du message (80) sur le système de communication numérique disposant de la même adresse d'expéditeur ;
   - la détermination de zones d'images numériques relatives à l'expéditeur (80) correspondant graphiquement et numériquement à la personne de l'expéditeur à partir de zone d'images identifiées sur la base d'images de références stockées dans le système de stockage,
   et/ou
   l'identification d'images sur la base des procédés de reconnaissance vocale (70), de procédés de vérification vocales ou des procédés d'identification vocales, en tenant compte des données vocales et des données d'image au sein du message, d'empreintes vocales et/ou de données vocales de référence au sein des données vidéos, lesquelles sont comparées les unes au autres,
   et/ou par la détermination de la fréquence d'apparition des zones images dans les messages ayant la même adresse d'expéditeur ;
   - l'utilisation d'une zone d'image relative à l'expéditeur pour produire un modèle graphique numérique d'un orateur (60), lequel reproduit le contenu du message avec animation de la bouche lors de la reproduction du message.

2. Le procédé suivant la revendication précédente, dans laquelle les zones identifiées des images sont utilisées pour la génération d'un modèle 3D.

3. Le procédé suivant la revendication précédente, **caractérisé en ce que**, lorsque la zone d'image est identifiée comme étant relative à l'expéditeur , les étapes suivantes sont mises en oeuvre :

- le stockage de la zone d'image 2D relative à l'expéditeur associée à l'adresse de l'expéditeur et des paramètres caractéristiques de l'apparence de l'expéditeur de l'image,
- le transfert de la zone d'image 2D relative à l'expéditeur et de zones d'image supplémentaires relatives à l'expéditeur provenant de messages précédents depuis le système de stockage vers un module de génération d'une image 3D,
- la détermination de la perspective/orientation de l'image 2D sur la base de proportions corporelles montrées,
- la recherche d'une seconde image 2D pour l'impression 3D, avec une seconde orientation requise, au moyen d'une évaluation de rapports de proportions corporelles **caractérisés par** des paramètres décrivant une perspective différente au sein d'un même niveau horizontal ;
- la mise en oeuvre d'une adaptation de taille ou de couleur de l'image détectée et collée ;
- la génération d'une image 3D au moins de l'orateur par le remplacement de l'image 2D original avec une seconde copie de cette image, dans laquelle l'image de l'expéditeur est coupée et remplacée par une image présentant une autre perspective.

**4.** Le procédé suivant la revendication précédente, dans laquelle au cours de la recherche d'une seconde image 2D on recherche en premier lieu des images de perspectives différentes au sein du message courant, de préférence avec l'utilisation de méthodes de reconnaissance faciale en présence de plusieurs personnes ;
dans le cas où le message courant ne comporte plus aucune image utilisable avec des perspectives différentes, la recherche est mise en oeuvre dans le système de stockage, et l'on effectue de préférence un examen des proportions des caractéristiques de l'image de l'expéditeur et/ou si les images supplémentaires trouvées avec des perspectives différentes satisfont à des limites prescrites, en particulier des valeurs décrivant un niveau d'image horizontal, notamment des angles d'image verticaux, et un niveau d'image vertical, en particulier des angles d'images horizontaux.

**5.** Le procédé selon l'une quelconque des revendications précédentes, dans lequel les données vocales du message et les données vocales du message vidéo sont comparées, et/ou une pluralité de données vocales des messages vidéos sont comparées les unes aux autres pour trouver des zones d'images pertinentes ou des images du message vidéo lorsqu'il y a un recouvrement des messages vocaux.

**6.** Le procédé selon l'une quelconque des revendications précédentes, dans lequel la génération 3D, la reconnaissance vocale, la détection de visage s'exécutent complètement ou partielles, sur un dispositif ou un serveur accessible depuis le réseau, dans lequel le stockage d'information identifiant différentes perspectives des images de l'expéditeur au seins des messages sont stockées sur un système de stockage d'un serveur ou localement dans une mémoire d'un dispositif mobile.

**7.** Le procédé selon l'une quelconque des revendications précédentes, dans lequel le modèle 3D consiste en une pluralité d'images 2D, qui sont stockées ensembles avec des données décrivant la perspective/l'orientation d'une seule image 2D.

**8.** Le procédé selon l'une quelconque des revendications précédentes, dans lequel l'insertion d'un autre arrière plan est choisi en fonction de la localisation détectée de l'expéditeur du message.

**9.** Un système de communication numérique dans lequel plusieurs messages personnels sont stockées sur un système de stockage, dans lequel les messages sont fournis avec les adresses de l'expéditeur, dans lequel une partie des messages comporte en outre des données d'image numérique ou des données vidéos, comportant les composants suivants :

- une unité (80) d'identification de zone d'image comportant des visages et/ou des personnes dans les données d'image numérique ou les données vidéo au sein du message (80) sur le système de communication numérique ayant la même adresse d'expéditeur ;
- une unité de détermination de zones d'images numériques relatives à l'expéditeur (80) correspondant graphiquement et numériquement à la personne de l'expéditeur à partir de zone d'images identifiées sur la base d'images de références stockées dans le système de stockage,
et/ou
l'identification d'images sur la base des procédés de reconnaissance vocale (70), de procédés de vérification vocales ou des procédés d'identification vocales, en tenant compte des données vocales et des données d'image au sein du message, d'empreintes vocales et/ou de données vocales de référence au sein des données vidéos, lesquelles sont comparées les unes au autres,

et/ou par la détermination de la fréquence d'apparition des zones images dans les messages ayant la même adresse d'expéditeur ;
- une unité (60) pour l'utilisation d'une zone d'image relative à l'expéditeur pour produire un modèle graphique numérique d'un orateur (60), lequel reproduit le contenu du message avec animation de la bouche lors de la reproduction du message.

10. Un système de communication numérique selon revendication précédente, dans laquelle les zones identifiées des images sont utilisées pour la génération d'un modèle 3D.

11. Un système de communication numérique selon la revendication de système précédente, **caractérisé par** :

- une interface de stockage de la zone d'image 2D relative à l'expéditeur associée à l'adresse de l'expéditeur et des paramètres caractéristiques de l'apparence de l'expéditeur de l'image,
- une interface de transfert de la zone d'image 2D relative à l'expéditeur et de zones d'image supplémentaires relatives à l'expéditeur provenant de messages précédents depuis le système de stockage vers un module de génération d'une image 3D,
- des moyens de détermination de la perspective/orientation de l'image 2D sur la base de proportions corporelles montrées,
- des moyens de recherche d'une seconde image 2D pour l'impression 3D, avec une seconde orientation requise, au moyen d'une évaluation de rapports de proportions corporelles **caractérisés par** des paramètres décrivant une perspective différente au sein d'un même niveau horizontal ;
- des moyens de génération d'une image 3D au moins de l'orateur par le remplacement de l'image 2D original avec une seconde copie de cette image, dans laquelle l'image de l'expéditeur est coupée et remplacée par une image présentant une autre perspective.

12. Un système de communication numérique selon revendication de système précédente, dans lequel les moyens de recherche sont conçus de telle manière que lors de la recherche d'une seconde image 2D
on recherche en premier lieu des images de perspectives différentes au sein du message courant, de préférence avec l'utilisation de méthodes de reconnaissance faciale en présence de plusieurs personnes ;
dans le cas où le message courant ne comporte plus aucune image utilisable avec des perspectives différentes, la recherche est mise en oeuvre dans le système de stockage, et l'on effectue de préférence un examen des proportions des caractéristiques de l'image de l'expéditeur et/ou si les images supplémentaires trouvées avec des perspectives différentes satisfont à des limites prescrites, en particulier des valeurs décrivant un niveau d'image horizontal, notamment des angles d'image verticaux, et un niveau d'image vertical, en particulier des angles d'images horizontaux.

13. Un système de communication numérique selon revendication de système précédente, comportant des moyens de comparaison des données vocales du message et des données vocales du message vidéo, et/ou pour la comparaison les unes par rapport aux autres d'une pluralité de données vocales des messages vidéos pour trouver des zones d'images pertinentes ou des images du message vidéo lorsqu'il y a un recouvrement des messages vocaux.

14. Un système de communication numérique selon l'une ou plusieurs des revendications de système, dans lequel les moyens de génération 3D, de reconnaissance vocale, de détection de visage sont localisés en tout ou e partie sur un dispositif ou un serveur accessible depuis le réseau, dans lequel le stockage d'information identifiant différentes perspectives des images de l'expéditeur au seins des messages sont stockées sur un système de stockage d'un serveur ou localement dans une mémoire d'un dispositif mobile.

15. Un système de communication numérique selon l'une ou plusieurs des revendications de systèmes précédentes, dans lequel le modèle 3D consiste en une pluralité d'images 2D, qui sont stockées ensembles avec des données décrivant la perspective/orientation d'une seule image 2D.

16. Un système de communication numérique selon l'une ou plusieurs des revendications précédentes, comportant un système d'insertion, lequel insère un arrière plan différent dépendant de la localisation détectée de l'expéditeur du message.

Fig. 1

Fig. 2a

Fig. 2b

Fig. 3a

Fig. 3b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1648151 A1
- DE 102004014189 A1
- EP 1412917 B1
- EP 0991023 B1
- US 4925294 A1
- DE 69628662 T2